(19) Europäisches Patentamt
European Patent Office
Office européen des brevets

(11) Publication number: 0 271 446 A1

(12) EUROPEAN PATENT APPLICATION

(21) Application number: 87810720.0

(22) Date of filing: 04.12.87

(51) Int. Cl.[4]: C 07 C 83/04
C 08 K 5/32

(30) Priority: 12.12.86 US 940834

(43) Date of publication of application:
15.06.88 Bulletin 88/24

(84) Designated Contracting States:
DE FR GB IT NL SE

(71) Applicant: CIBA-GEIGY AG
Klybeckstrasse 141
CH-4002 Basel (CH)

(72) Inventor: Ravichandran, Ramanathan
111 de Haven Drive Apt. 125
Yonkers New York 10703 (US)

Seltzer, Raymond
11 Angus Lane
New City New York 10956 (US)

# (54) Substituted hydroxylamines and compositions stabilized therewith.

(57) The novel compounds of formula (I)

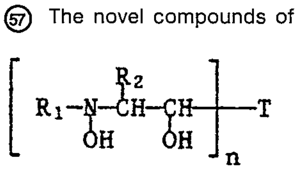

(I)

wherein $R_1$ is alkyl having 1 to 36 carbon atoms, cycloalkyl having 5 to 12 carbon atoms, phenyl which is unsubstituted or substituted by alkyl having 1 to 36 carbon atoms, naphthyl which is unsubstituted or substituted by alkyl having 1 to 36 carbon atoms, or aralkyl having 7 to 9 carbon atoms which is unsubstituted or substituted by alkyl having 1 to 36 carbon atoms, $R_2$ is hydrogen or has one of the meanings given for $R_1$, n is 1 to 4, and
when n is 1, T has one of the meanings given for $R_1$ or is

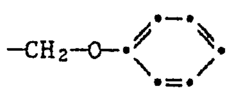

, or T and $R_2$ together with the carbon atoms to which they are attached form a ring containing 5 to 12 carbon atoms, when n is 2, T is alkylene having 2 to 12 carbon atoms, or

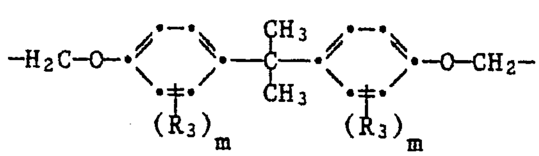

wherein m is 1 or 2 and $R_3$ is hydrogen, alkyl or alkoxy each having 1 to 4 carbon atoms, hydroxyl, halogen, cyano or nitro, or T is

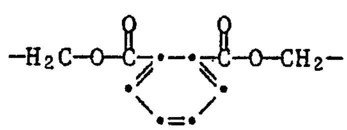

,

or $R_2$ and T together with the carbon atoms to which they are attached form a 6-membered to 12-membered carbocyclic ring, when n is 3, T is

EP 0 271 446 A1

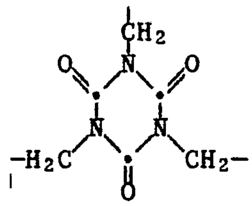

or

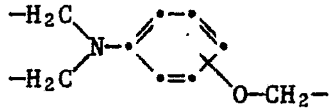

and
when n is 4, T is

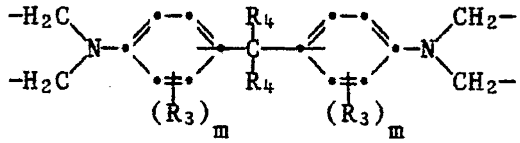

wherein $R_4$ is hydrogen or methyl and $R_3$ and m are as previously defined, are effective in stabilizing an organic material against oxidative, thermal and/or actinic degradation.

In addition to the novel compounds of formula (I), corresponding compounds with

T = 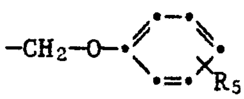

wherein $R_5$ is alkyl or alkoxy each having 1 to 4 carbon atoms, hydroxyl, halogen, cyano or nitro, also provide effective stabilizing activity.

**Description**

SUBSTITUTED HYDROXYLAMINES AND COMPOSITIONS STABILIZED THEREWITH

The present invention relates to novel substituted hydroxylamines, to compositions stabilized with substituted hydroxylamines and to the use of said hydroxylamines for stabilizing organic materials against oxidative, thermal and/or actinic degradation.

Organic polymeric materials such as plastics and resins are subject to thermal, oxidative and photodegradation. A great variety of stabilizers are known in the art for stabilizing a diversity of substrates. Their effectiveness varies depending upon the causes of degradation and the substrate stabilized. In general, it is difficult to predict which stabilizer will be most effective and most economical for any one area of application. For example, stabilizer effectiveness in reducing volatility may depend upon preventing bond scission in the substrate molecule. Limiting embrittlement and retaining elasticity in a polymer or rubber may require prevention of excessive crosslinking and/or chain scission. Prevention of discoloration may require inhibiting reactions which yield new chromophores or color bodies in the substrate or stabilizer. Problems of process stability and incompatibility must also be considered.

Various organic hydroxylamine compounds are generally known and some are commercially available. A number of patents disclose nitrogen-substitued hydroxylamines as antioxidant stabilizers for various substrates including polyolefins, polyesters and polyurethanes. U.S. 3,432,578, 3,644,278, 3,778,464, 3,408,422, 3,926,909, 4,316,996, 4,386,224 and 4,590,231 are representative of such patents which basically disclose N,N-dialkyl-, N,N-diaryl and N,N-diaralkyl hydroxylamine compounds and their color improvement and color stabilizing activity.

In addition, various hydroxylamine-epoxide adducts are described in the literature. For example, various β-hydroxypropylhydroxyamino aryl ethers are disclosed in Malinovskii et al, Zhurnal Organish. Khimii 1, 1365-1367 (1965). Zhang et al, J. Med. Chem. 26, 455-458 (1983) report on the synthesis of 1-$C_{10}H_7$-$OCH_2CH(OH)CH_2N(OH)CH(CH_3)_2$. Jordan et al, J. C. S. PTI 1, 928-933 (1978) describe various $ArOCH_2CH(OH)CH_2N(OH)CH(CH_3)_2$ compounds. Polymer stabilization utilizing these compounds is not indicated in these publications.

The present invention pertains to compounds of formula (I)

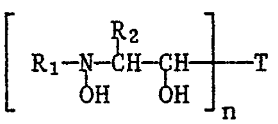

(I)

wherein $R_1$ is alkyl having 1 to 36 carbon atoms, cycloalkyl having 5 to 12 carbon atoms, phenyl which is unsubstituted or substituted by alkyl having 1 to 36 carbon atoms, naphthyl which is unsubstituted or substituted by alkyl having 1 to 36 carbon atoms, or aralkyl having 7 to 9 carbon atoms which is unsubstituted or substituted by alkyl having 1 to 36 carbon atoms, $R_2$ is hydrogen or has one of the meanings given for $R_1$, n is 1 to 4, and

when n is 1, T has one of the meanings given for $R_1$ or is

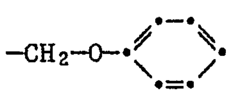

, or T and $R_2$ together with the carbon atoms to which they are attached from a ring containing 5 to 12 carbon atoms,

when n is 2, T is alkylene having 2 to 12 carbon atoms, or

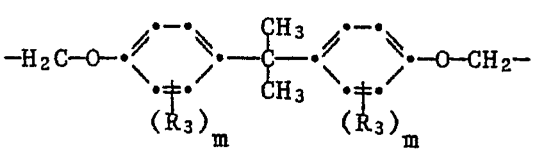

wherein m is 1 or 2 and $R_3$ is hydrogen, alkyl or alkoxy each having 1 to 4 carbon atoms, hydroxyl, halogen, cyano or nitro, or T is

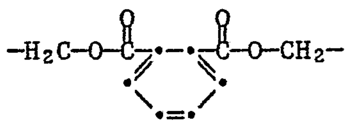,

or $R_2$ and T together with the carbon atoms to which they are attached form a 6-membered to 12-membered carbocyclic ring,

when n is 3, T is

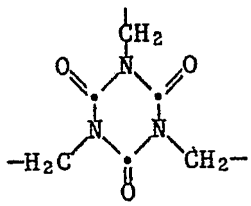 or 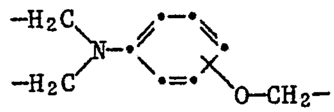

and

when n is 4, T is

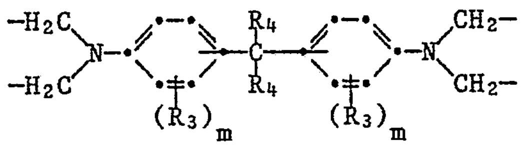,

wherein $R_4$ is hydrogen or methyl and $R_3$ and m are as previously defined.

Thus, these compounds serve to protect various substrates such as polyolefins, elastomers and lubricating oils against the adverse effects of oxidative and/or thermal degradation. The are most effective as color improvers and process stabilizers in polyolefin compositions which may contain metal salts of fatty acids and which also contain a phenolic antioxidant. Thus, they serve to substantially reduce color formation resulting from the presence of the phenolic antioxidant and/or from the processing conditions as well as directly protect the polymer from said processing conditions. They also prevent the discoloration of polyolefin compostions containing hindered amine light stabilizers or combinations contain ing hindered amine light stabilizers or combinations of phenolic antioxidants and organic phosphites. In addition, the gas fading that may be experienced upon exposure to the combustion products of natural gas is also significantly reduced.

Suitable alkyl radicals for $R_1$, $R_2$ and T are, for example, methyl, ethyl, propyl, butyl, pentyl, hexyl, octyl, decyl, tetradecyl, hexadecyl, eicosyl, docosyl, pentacosyl, heptacosyl, triacontyl, dotriacontyl, tetratriacontyl and hexatriacontyl as well as branched isomers thereof. Alkyl of 1 to 18 carbon atoms is preferred.

As cycloalkyl, $R_1$, $R_2$ and T are, for example, cyclopentyl, cyclohexyl, cycloheptyl, cyclooctyl, cyclodecyl and cyclododecyl. Cycloalkyl of 5 to 8 carbon atoms is preferred. Cyclohexyl and cyclooctyl are especially preferred.

$R_1$, $R_2$ and T as aralkyl of 7 to 9 carbon atoms or such aralkyl being substituted by alkyl of 1 to 36 carbon atoms may be in particular phenylalkyl of 7 to 9 carbon atoms where the phenyl ring is optionally substituted by alkyl of 1 to 36 carbon atoms, preferably by methyl. Examples are benzyl, α-methylbenzyl, α,α-dimethylbenzyl, 3-or 4-methylbenzyl, 3,5-dimethylbenzyl and 4-nonylbenzyl. Phenylethyl and phenylpropyl, especially benzyl are preferred.

When n denotes 1 and T and $R_2$ together with the carbon atoms to which they are attached form a ring containing 5 to 12 carbon atoms, the ring may be a saturated carbocyclic ring and thus includes cyclopentyl, cyclohexyl, cyclooctyl, cyclononyl or cyclododecyl.

T as alkylene having 2 to 12 carbon atoms includes e.g. ethylene, propylene, butylene, hexylene, octylene, nonylene, decylene, dodecylene or branched isomers thereof. Alkylene of 2 to 5 carbon atoms is preferred.

When n is 2 and $R_2$ and T together with the carbon atoms to which they are attached form a 6- to 12-membered carbocyclic ring, this ring is preferably a saturated carbocyclic ring and includes, for example, cyclohexyl, cyclooctyl, cyclononyl, cyclodecyl and cyclododecyl. In this particular case the compounds of formula (I) preferably correspond to compounds of the formula

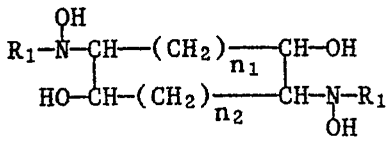

wherein $n_1$ and $n_2$ are independently an integer from 0 to 8 subject to the proviso that $n_1 + n_2$ is an integer from 2 to 8.

When T is a group

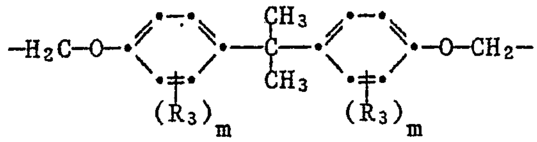 each substi-

each substituent $R_3$ may be in the ortho- or meta-position to the $-H_2C-O-$radical.

When T is a group

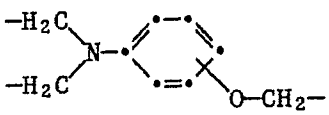

, the $-O-CH_2-$ group preferably occupies the para-position to the $(-H_2C)_2N-$ radical.

When T is a group

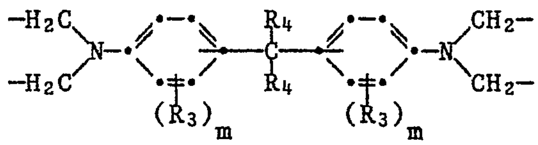 , each substi-

, each substituent $R_3$ may be preferably in the ortho- or meta-position to the $(-H_2C)_2N-$ radical and the substituent

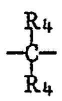 is preferably attached to

is preferably attached to the phenyl ring in the para-position to each $(-H_2C)_2N-$ group.

Examples of $R_3$ as alkyl or alkoxy each having 1 to 4 carbon atoms are methyl, ethyl, propyl, tert-butyl, methoxy, propoxy and butoxy.

According to a preferred embodiment $R_1$ is alkyl having 1 to 18 carbon atoms, cycloalkyl having 5 to 8 carbon atoms, phenyl, benzyl or phenylethyl, $R_2$ is hydrogen, n is 1 to 4, and,
when n is 1, T has one of the meanings given for $R_1$ or is

is 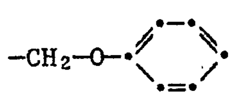 ,

when n is 2, T is alkylene having 2 to 5 carbon atoms or

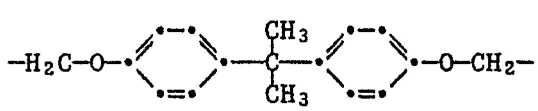 ,

when n is 3, T is

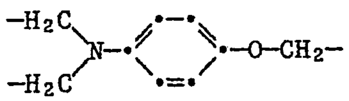

, and
when n is 4, T is

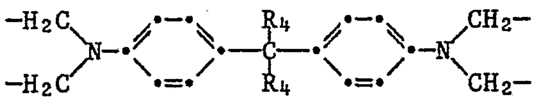

,

wherein $R_4$ is hydrogen or methyl.

Compounds of formula (I) wherein $R_1$ is alkyl having 3 to 6 or 8 to 18 carbon atoms, cyclohexyl, cyclooctyl, phenyl or benzyl and n is 1 or 2, and,
when n is 1, T has one of the meanings given for $R_1$ or is

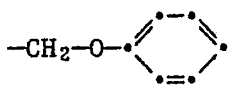

,

, and
when n is 2, T is alkylene having 2 or 3 carbon atoms or

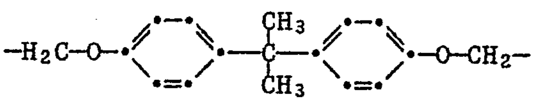

,

are also preferred.

Those compounds of formula (I) are of interest, wherein $R_1$ is alkyl having 1 to 12 carbon atoms, cycloalkyl having 5 to 8 carbon atoms, phenyl, benzyl or phenylethyl, n is 2 and $R_2$ and T together with the carbon atoms to which they are attached form a 6-membered to 8-membered carbocyclic ring.

Preferred examples of compounds of formula (I) are:

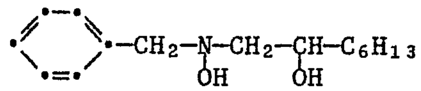 ,

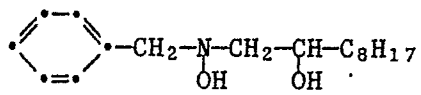 ,

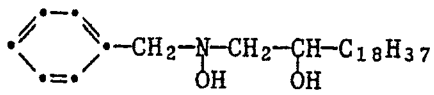 ,

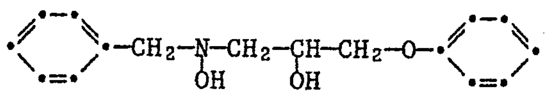 ,

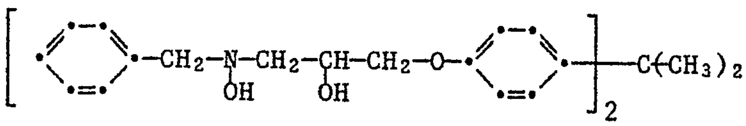 ,

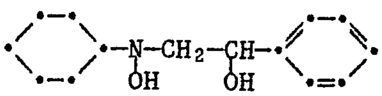 ,

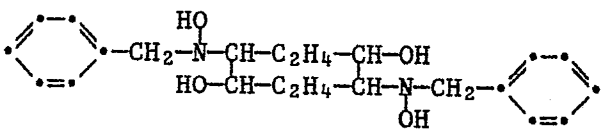 .

The compounds of formula (I) can be prepared by methods known per se, e.g. by reacting an hydroxylamine of the formula (II)

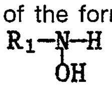 (II)

with an epoxide of the formula (III)

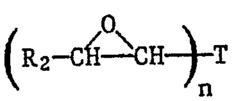

wherein $R_1$, $R_2$, T and n are as defined above. The reaction is preferably carried out in the presence of a polar organic solvent at a temperature from 25 to 100° C, in particular room temperature, and under an inert gas, e.g. a nitrogen atmosphere. The solvent can be, for example, an alcohol, ether or ketone or mixtures thereof with lower alcohols such as e.g. ethanol, n-propanol, isopropanol, n-butanol and isobutanol. However, other solvents which do not interfere with the reaction are also applicable.

The starting materials are items of commerce or can be prepared by known methods.

It has also been found that in addition to the novel compounds of the formula (I), corresponding compounds with

T = 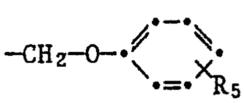

wherein $R_5$ is, for example, alkyl or alkoxy each having 1 to 4 carbon atoms, hydroxyl, halogen, cyano or nitro, also provide effective stabilizing activity. These latter compounds are partially known (see e.g. Jordan et al noted hereinabove).

Thus, the present invention also related to compositions comprising an organic material subject to oxidative, thermal and/or actinic degradation and at least one compound of formula (IA)

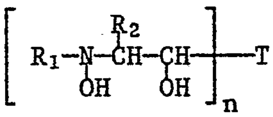 (IA)

wherein the definitions of $R_1$, $R_2$, T and n are identical to those of formula (I) and, in addition, when n is 1, T can also be

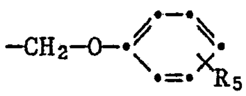

, where $R_5$ is alkyl or alkoxy each having 1 to 4 carbon atoms, hydroxyl, halogen, cyano or nitro.

Of interest are those compositions comprising a compound of formula (IA) wherein n and the radicals $R_1$, $R_2$ and T have the preferred meanings listed above under formula (I).

When T is a group

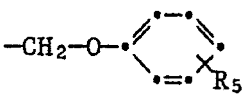

, the substituent $R_5$ is preferably in the para-position.

$R_5$ as alkyl or alkoxy each having 1 to 4 carbon atoms is, for example, methyl, ethyl, propyl, tert-butyl, methoxy, propoxy or butoxy.

The compounds of formula (IA) can be prepared e.g. by analogy to the compounds of formula (I) as described above.

The compounds of formula (IA) are effective in stabilizing organic materials such as e.g. plastics, polymers and resins in addition to mineral and synthetic fluids such as e.g. lubricating oils, circulating oils, etc.

Substrates in which the compounds of formula (IA) are particularly useful are polyolefin homo- and copolymers such as polyethylene and polypropylene, polystyrene, including impact polystyrene, ABS resin, SBR, isoprene, as well as natural rubber, polyesters including polyethylene terephthalate and polybutylene terephthalate, including copolymers and lubricating oils such as those derived from mineral oil.

In general, polymers which can be stabilized include:

1. Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optioanlly can be crosslinked), for example high density polyethylene (HDPE), low density polyethylene (LDPE and linear low density polyethylene (LLDPE).

2. Mixtures of the polymers methioned under 1), for example mixtures of polypropylene with polyisobutylene, polypropylene with polyethylene (for example PP/HDPE, PP/LDPE) and mixtures of different types of polyethylene (for example LDPE/HDPE).

3. Copolymers of monoolefines and diolefines with each other or with other vinyl monomers, such as, for example, ethylene/propylene, linear low density polyethylene (LLDPE) and its mixtures with low density polyethylene (LDPE), propylene/butene-1, ethylene/hexene, ethylene/ethylpentene, ethylene/heptene, ethylene/octene, propylene/isobutylene, ethylene/butene-1, propylene/butadiene, isobutylene/isoprene, ethylene/alkyl acrylates, ethylene/alkyl methacrylates, ethylene/vinyl acetate or ethylene/acrylic acid copolymers and their salts (ionomers) and terpolymers of ethylene with propylene and a diene, such as hexadiene, dicyclopentadiene or ethylidene-norbornene; as well as mixtures of such copolymers and their mixtures with polymers mentioned in 1) above, for example polypropylene/ethylene-propylene-copolymers, LDPE/EVA, LDPE/EAA, LLDPE/EVA and LLDPE/EAA.

3a. Hydrocarbon resins (for example $C_5$-$C_9$) and hydrogenated modifications thereof (for example tackyfiers).

4. Polystyrene, poly-(p-methylstyrene), poly-($\alpha$-methylstyrene).

5. Copolymers of styrene or $\alpha$-methylstyrene with dienes or acrylic derivatives, such as, for example, styrene/butadiene, styrene/acrylonitrile, styrene/alkyl methacrylate, styrene/maleic anhydride, styrene/butadiene/ethyl acrylate, styrene/acrylonitrile/methyl acrylate; mixtures of high impact strength from styrene copolymers and another polymer, such as, for example, from a polyacrylate, a diene polymer or an ethylene/propylene/diene terpolymer; and block copolymers of styrene, such as, for example, styrene/butadiene/styrene, styrene/ isoprene/styrene, styrene/ethylene/butylene/styrene or styrene/ethylene/propylene/styrene.

6. Graft copolymers of styrene or $\alpha$-methylstyrene such as, for example, styrene on polybutadiene,

styrene on polybutadiene-styrene or polybutadiene-acrylonitrile; styrene and acrylonitrile (or methacrylonitrile) on polybutadiene; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures thereof with the copolymers listed under 5), for instance the copolymer mixtures known as ABS-, MBS-, ASA- or AES-polymers.

7. Halogen-containing polymers, such as polychloroprene, chlorinated rubbers, chlorinated or sulfochlorinated polyethylene, epichlorohydrine homo- and copolymers, polymers from halogen-containing vinyl compounds,as for example, polyvinylchloride, polyvinylidene chloride, polyvinyl fluoride, polyvinylidene fluoride, as well as copolymers thereof, as for example, vinyl chloride/vinylidene chloride, vinyl chloride/vinyl acetate or vinylidene chloride/vinyl acetate copolymers.

8. Polymers which are derived from $\alpha,\beta$-unsaturated acids and derivatives thereof, such as polyacrylates and polymethacrylates, polyacrylamide and polyacrylonitrile.

9. Copolymers from the monomers mentioned under 8) with each other or with unsaturated monomers, such as, for instance, acrylonitrile/butadien, acrylonitrile/alkyl acrylate, acrylonitrile/alkoxyalkyl acrylate or acrylonitrile/vinyl halogenide copolymers or acrylonitrile/alkyl methacrylate/butadiene terpolymers.

10. Polymers which are derived from unsaturated alcohols and amines, or acyl derivatives thereof or acetals thereof, such as polyvinyl alcohol, polyvinyl acetate, polyvinyl stearate, polyvinyl benzoate, polyvinyl maleate, polyvinylbutyral, polyallyl phthalate or polyallyl-melamine; as well as their copolymers with olefins mentioned in 1) above.

11. Homopolymers and copolymers of cyclic ethers, such as polyalkylene glycols, polyethylene oxide, polypropylene oxide or copolymers thereof with bis-glycidyl ethers.

12. Polyacetals, such as polyoxymethylene and those polyoxymethylenes which contain ethylene oxide as a comonomer; polyacetals modified with thermoplastic polyurethanes, acrylates or MBS.

13. Polyphenylene oxides and sulfides, and mixtures of polyphenylene oxides with polystyrene or polyamides.

14. Polyurethanes which are derived from polyethers, polyesters or polybutadiens with terminal hydroxyl groups on the one side and aliphatic or aromatic polyisocyanates on the other side, as well as precursors thereof (polyisocyanates, polyols or prepolymers).

15. Polyamides and copolyamides which are derived from diamines and dicarboxylic acids and/or from aminocarboxylic acids or the corresponding lactams, such as polyamide 4, polyamide 6, polyamide 6/6, 6/10, 6/9, 6/12 and 4/6, polyamide 11, polyamide 12, aromatic polyamides obtained by condensation of m-xylene, diamine and adipic acid; polyamides prepared from hexamethylene diamine and isophthalic or/and terephthalic acid and optionally an elastomer as modifier, for example poly-2,4,4,-trimethylhexamethylene terephthalamide or poly-m-phenylene isophthalamide. Further copolymers of the aforementioned polyamides with polyolefins, olefin copolymers, ionomers or chemically bonded or grafted elastomers; or with polyethers, such as for instance, with polyethylene glycol, polypropylene glycol or polytetramethylene glycols. Polyamides or copolyamides modified with EPDM or ABS. Polyamides condensed during processing (RIM-polyamide systems).

16. Polyureas, polyimides and polyamide-imides.

17. Polyesters which are derived from dicarboxylic acids and diols and/or from hydroxycarboxylic acids or the corresponding lactones, such as polyethylene terephthalate, polybutylene terephthalate, poly-1,4-dimethylol-cyclohexane terephthalate, poly-[2,2,-(4-hydroxyphenyl)-propane] terephthalate and polyhydroxybenzoates as well as block-copolyether-esters derived from polyethers having hydroxyl end groups.

18. Polycarbonates and polyester-carbonates.

19. Polysulfones, polyethersulfones and polyetherketones.

20. Crosslinked polymers which are derived from aldehydes on the one hand and phenols, ureas and melamines on the other hand, such as phenol/formaldehyde resins, urea/formaldehyde resins and melamine/formaldehyde resins.

21. Drying and non-drying alkyd resins.

22. Unsaturated polyester resins which are derived from copolyesters of saturated and unsaturated dicarboxylic acids and polyhydric alcohols and vinyl compounds as crosslinking agents, and also halogen-containing modifications thereof of low inflammability.

23. Thermosetting acrylic resins, derived from substituted acrylic esters, such as epoxy-acrylates, urethane-acrylates or polyesteracrylates.

24. Alkyd resins, polyester resins or acrylate resins in admixture with melamine resins, urea resins, polyisocyanates or epoxide resins as crosslinking agents.

25. Crosslinking epoxide resins which are derived from polyepoxides, for example from bis-glycidyl ethers or from cycloaliphatic diepoxides.

26. Natural polymers, such as cellulose, rubber, gelatine and derivatives thereof which are chemically modified in a polymerhomologous manner, such as cellulose acetates, cellulose propionates and cellulose butyrates, or the cellulose ethers, such as methylcellulose; rosins and their derivatives.

27. Mixtures of polymers as mentioned above, for example PP/EPDM, Polyamide 6/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPE/HIPS, PPE/PA 6.6 and copolymers, PA/HDPE, PA/PP, PA/PPE.

28. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellithates) and also mixtures of synthetic esters with mineral oils in any weight ratios, which materials may be used as plasticizer for polymers or as textile spinning oils, as well as aqueous emulsions of such materials.

29. Aqueous emulsions of natural or synthetic rubber, e.g. natural latex or latices of carboxylated styrene/butadiene copolymers.

Preferred compositions are those wherein the organic material is a synthetic polymer, in particular a polyolefin homopolymer or copolymer.

In general, the compounds of formula (IA) are empolyed in from about 0.01 to about 5 % by weight of the stabilized composition, although this will vary with the particular substrate and application. An advantageous range is from about 0.5 to about 2 %, and especially about 0.1 to about 1 %.

The compounds of formula (IA) may readily be incorporated into the organic material by conventional techniques, at any convenient stage prior to the manufacture of shaped articles therefrom. For example, the stabilizer may be mixed with the organic material in dry powder form, or a suspension or emulsion of the stabilizer may be mixed with a solution, suspension, or emulsion of the material to be stabilized.

The stabilized compositions of the invention may optionally also contain various conventional additives, such as the following.

1. Antioxidants

1.1 Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol.

1.2. Alkylated hydroquinones,for example 2,6-di-tert-butyl-4-methoxyphenol, 2,5-di-tert-butylhydroquinone, 2,5-di-tert-amylhydroquinone, 2,6-diphenyl-4-octadecyloxyphenol.

1.3 Hydroxylated thiodiphenyl ethers, for example 2,2′-thiobis(6-tert-butyl-4-methylphenol), 2,2′-thiobis(4-octylphenol), 4,4′-thiobis(6-tert-butyl-3-methylphenol), 4,4′-thiobis(6-tert-butyl-2-methylphenol).

1.4. Alkylidenebisphenols, for example 2,2′-methylenebis(6-tert-butyl-4-methylphenol), 2,2′-methylenebis(6-tert-butyl-4-ethylphenol), 2,2′-methylenebis[4-methyl-6-(α-methylcyclohexyl)phenol], 2,2′-methylenebis(4-methyl-6-cyclohexylphenol), 2,2′-methylenebis(6-nonyl-4-methylphenol), 2,2′-methylenebis(4,6-di-tert-butylphenol), 2,2′-ethylidenebis(4,6-di-tert-butylphenol), 2,2′-ethylidenebis(6-tert-butyl-4-isobutylphenol), 2,2′-methylenebis[6-(α-methylbenzyl)-4-nonylphenol], 2,2′-methylenebis[6-(α,α-dimethylbenzyl)-4-nonylphenol], 4,4′-methylenebis(2,6-di-tert-butylphenol), 4,4′-methylenebis(6-tert-butyl-2-methylphenol, 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glyco bis[3,3-bis(3′-tert-butyl-4′-hydroxyphenyl)butyrate], bis(3-tert-butyl-4-hydroxy-5-methylphenyl)dicyclopentadiene, bis[2-(3′-tert-butyl-2′-hydroxy-5′-methylbenzyl)-6-tert-butyl-4methylphenyl] terephthalate.

1.5. Benzyl compounds, for example 1,3,5-tris(3,5-di-tert-butyl-4-hydroxybenzyl)-2,4,6-trimethylbenzene, bis(3,5-di-tert-butyl-4-hydroxybenzyl) sulfide, isooctyl 3,5-di-tert-butyl-4-hydroxybenzylmercaptoacetate, bis(4-tert-butyl-3-hydroxy-2,6-dimethylbenzyl) dithiolterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxybenzylphosphonate, calcium salt of monoethyl 3,5-di-tert-butyl-4-hydroxybenzylphosphonate, 1,3,5-tris(3,5-dicyclohexyl-4-hydroxybenzyl)isocyanurate.

1.6. Acylaminophenols, for example anilide of 4-hydroxylauric acid, anilide of 4-hydroxystearic acid, 2,4-bis(octylmercapto)-6-(3,5-di-tert-butyl-4-hydroxyanilino)-s-triazine, octyl N-(3,5-di-tert-butyl-4-hydroxyphenyl)carbamate.

1.7. Esters of β-(3,5-di-tert-butyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.8. Esters of β-(5-tert-butyl-4-hydroxy-3-methylphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.9. Esters of β-(3,5-dicyclohexyl-4-hydroxyphenyl)propionic acid with mono- or polyhydric alcohols, e.g. with methanol, diethylene glycol, octadecanol, triethylene glycol, 1,6-hexanediol,

pentaerythritol, neopentyl glycol, tris(hydroxyethyl) isocyanurate, thiodiethylene glycol, N,N'-bis(hydroxyethyl)oxalic acid diamide.

1.10. Amides of β-(3,5-di-tert-butyl-4-hydroxyphenyl)propionic acid e.g. N,N'-bis(3,5-di-tert-butyl-4-hydroxyphenylpropionyl)hexamethylene-diamine, N,N'-bis(3,5-di-tert-butyl-4-hydroxyphenylpropionyl)trimethylene-diamine, N,N'-bis(3,5-di-tert-butyl-4-hydroxyphenylpropionyl)hydrazine.

2. UV absorbers and light stabilisers

2.1. 2-(2'-Hydroxyphenyl)benzotriazoles, for example the 5'-methyl, 3',5'-di-tert-butyl, 5'-tert-butyl, 5'-(1,1,3,3-tetramethylbutyl), 5-chloro-3', 5'-di-tert-butyl, 5-chloro-3'-tert-butyl-5'-methyl, 3'-sec-butyl-5'-tert-butyl, 4'-octoxy, 3',5'-di-tert-amyl and 3',5'-bis (α,α-dimethylbenzyl) derivatives.

2.2 2-Hydroxybenzophenones, for example the 4-hydroxy, 4-methoxy, 4-octoxy, 4-decyloxy, 4-dodecyloxy, 4-benzyloxy, 4,2',4'-trihydroxy and 2'-hydroxy-4,4'-dimethoxy derivatives.

2.3 Esters of substituted and unsubstituted benzoic acids, for example, 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate and hexadecyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxycinnamate, methyl α-carbomethoxy-p-methoxycinnamate and N-(β-carbomethoxy-β-cyanovinyl)-2-methylindoline.

2.5 Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of 4-hydroxy-3,5-di-tert-butylbenzylphosphonic acid monoalkyl esters, e.g. of the methyl or ethyl ester, nickel complexes of ketoximes, e.g. of 2-hydroxy-4-methylphenyl undecyl ketoneoxime, nickel complexes of 1-phenyl-4-lauroyl-5-hydroxypyrazole, with or without additional ligands.

2.6 Sterically hindered amines, for example bis(2,2,6,6-tetramethylpiperidyl) sebacate, bis(1,2,2,6,6-pentamethylpiperidyl) sebacate, bis(1,2,2,6,6-pentamethylpiperidyl) n-butyl-3,5-di-tert-butyl-4-hydroxybenzylmalonate, the condensation product of 1-hydroxyethyl-2,2,6,6-tetramethyl-4-hydroxypiperidine and succinic acid, the condensation product of N,N'-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis (2,2,6,6-tetramethyl-4-piperidyl)-1,2,3,4-butane tetracarboxylate, 1,1'-(1,2-ethanediyl)bis(3,3,5,5-tetramethylpiperazinone).

2.7. Oxalic acid diamides, for example 4,4'-dioctyloxyoxanilide, 2,2'-dioctyloxy-5,5'-di-tert-butyloxanilide, 2,2'-didodecyloxy-5,5'-di-tert-butyloxanilide, 2-ethoxy-2'-ethyloxanilide, N,N'-bis(3-dimethylaminopropyl)oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy-disubstituted oxanilides and mixtures of o- and p-ethoxy-disubstituted oxanilides.

3. Metal deactivators, for example, N,N'-diphenyloxalic acid diamide, N-salicylal-N'-salicyloylhydrazine, N,N'-bis(salicyloyl)hydrazine, N,N'-bis(3,5-di-tert-butyl-4-hydroxyphenylpropionyl)hydrazine, 3-salicyloylamino-1,2,4,-triazole, bis(benzylidene)oxalic acid dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, tristearyl sorbitol triphosphite, tetrakis(2,4-di-tert-butylphenyl) 4,4'-biphenylene diphosphonite, 3,9-bis(2,4-di-tert-butylphenoxy)-2,4,8,10-tetraoxa-3,9-diphosphaspiro[5.5]undecane.

5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

6. Polyamide stabilisers, for example, copper salts in combination with iodides and/or phosphorus compounds and salts of divalent manganese.

7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

8. Nucleating agents, for example, 4-tert.butyl-benzoic acid, adipic acid, diphenylacetic acid.

9. Fillers and reinforcing agents, for example, calcium carbonate, silicates, glass fibres, asbestos, talc, kaolin, mica, barium sulfate, metal oxides and hydroxydes, carbon black, graphite.

10. Other additives, for example, plasticisers, lubricants, emulsifiers, pigments, optical brighteners, flameproofing agents, antistatic agents and blowing agents.

The compositions of the invention preferably contain a metal salt of a higher fatty acid and/or a phenolic antioxidant as further additives.

While the compounds of formula (IA) can be beneficially used as stabilizers for a variety of substrates, particularly the polyolefins, both alone and in conjunction with other coadditives, the introduction of the compounds of formula (IA) into polyolefins, optionally containing various alkali metal, alkaline earth metal and

aluminum salts of higher fatty acids (see Additive #7 hereinabove), with hindered phenolic antioxidants results in enhanced and particularly salubrious protection to such substrates in terms of reducing color formation stemming from the presence of the phenols. Such phenolic antioxidants include n-octadecyl 3,5-di-tert-butyl-4-hydroxyhydrocinnamate, neopentanetetrayl tetrakis(3,5-di-tert-butyl-4-hydroxyhydrocinnamate), di-n-octadecyl 3,5-di-tert-butyl-4-hydroxybenzylphosphonate, 1,3,5-tris(3,5-di-tert-butyl-4-hydroxybenzyl)isocyanurate, thiodiethylene bis(3,5-di-tert-butyl- 4-hydroxyhydrocinnamate), 1,3,5-trimethyl-2,4,6-tris(3,5-di-tert-butyl-4-hydroxybenzyl)benzene, 3,6-dioxaoctamethylene bis (3-methyl-5-tert-butyl-4-hydroxyhydrocinnamate), 2,6-di-tert-butyl-p-cresol, 2,2′-ethylidene-bis(4,6-di-tert-butylphenol), 1,3,5-tris(2,6-dimethyl-4-tert-butyl-3-hydroxybenzyl)isocyanurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-bis(3,5-di-tert-butyl-4-hydroxybenzyl)mesitol, hexamethylene bis(3,5-di-tert-butyl-4-hydroxyhydrocinnamate), 1-(3,5-di-tert-butyl-4-hydroxyanilino)-3,5-bis(Octylthio)-s-triazine, N,N′-hexamethylene-bis(3,5-di-tert-butyl-4-hydroxyhydrocinnamamide), calcium bis(ethyl-3,5-di-tert-butyl-4-hydroxybenzylphosphonate), ethylene bis[3,3-bis(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N′-bis[2-(3,5-di-tert-butyl-4-hydroxyhydrocinnamoyloxy)ethyl]oxamide.

Preferred antioxidants are neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol and 2,2′-ethylidene-bis(4,6-di-tert-butylphenol).

Likewise, the compounds of formula (IA) prevent color formation when hindered amine light stabilizers are present, such hindered amines including bis(1,2,2,6,6-pentamethyl-4-piperidyl)-2-n-butyl-2-(3,5-di-tert-butyl-4-hydroxybenzyl)malonate; bis(2,2,6,6-tetramethyl-4-piperidyl)sebacate; dimethylsuccinate polymer with 1-hydroxyethyl-2,2,6,6-tetramethyl-4-hydroxypiperidine; and polymer of 2,4-di-chloro-6-octylamino-s-triazine with N,N′-bis(2,2,6,6-tetramethyl-4-piperidyl)hexamethylenediamine.

The following examples illustrate preferred specific embodiments of the instant invention. In these examples, all parts given are by weight unless otherwise specified.

Example 1: Preparation of 2,2-bis[4-[3-(N-benzyl-N-hydroxyamino)-2-hydroxypropyl]oxyphenyl]propane

A solution of 6.0 g of 2,2-bis[4-(glycidyloxy)phenyl]propane and 4.43 g of N-benzylhydroxylamine in 20 ml of isopropanol is stirred at room temperature overnight under a nitrogen atmosphere. The reaction mixture is then concentrated under reduced pressure and the residue is purified by liquid chromatography to afford the compound in 57 % yield as a white solid having a melting point of 131 to 136°C.

Anal. Calcd. for $C_{35}H_{42}N_2O_6$: C, 71.7; H, 7.2; N, 4.8.
Found: C, 71.5; H, 7.3; N, 4.6.

Example 2: Preparation of N-benzyl-N-(2-hydroxy-3-phenoxypropyl)hydroxylamine

The procedure of Example 1 is repeated using 3.5 g of N-benzylhydroxylamine and 6.16 g of phenylglycidyl ether in 50 ml of isopropanol. Purification by liquid chromatography affords the title compound in 35 % yield as a colorless oil.

Anal. Calcd, for $C_{16}H_{19}NO_3$: C, 70.3; H, 7.0; N, 5.1.
Found: C, 70.6; H, 6.8; N, 5.0.

Example 3: Preparation of N-benzyl-N-(2-hydroxyoctyl)hydroxylamine

The procedure of Example 1 is repeated using 5.0 g of N-benzylhydroxylamine and 5.26 g octene-1-oxide in 20 ml of isopropanol. Purification by liquid chromatography affords the title compound in a 38 % yield as a colorless oil.

Anal. Calcd. for $C_{15}H_{25}NO_2$: C, 71.7; H, 10.0; N, 5.6.
Found: C, 72.0; H, 10.0; N, 5.4.

Example 4: Preparation of N-cyclohexyl-N-[2-hydroxy-2-phenylethyl)hydroxylamine

A solution of 2.14 g of N-cyclohexylhydroxylamine and 2.23 g of styrene oxide in 50 ml of isopropanol is heated at 45°C for 3 hours and under reflux for 20 hours. The reaction mixture is concentrated under reduced pressure and the residue is pufified by liquid chromatography to afford the title compound in a 33 % yield as a yellow oil.

Anal. Calcd. for $C_{14}H_{21}NO_2$: C, 71.5; H, 9.0; N, 6.0.
Found C, 71.7; H, 8.6; N, 6.0.

Example 5: Processing of polypropylene

This example illustrates the thermal stabilizing effectiveness of the instant stabilizers in combination with a phenolic antioxidant in polypropylene.

Base Formulation

| | |
|---|---|
| Polypropylene* | 100 parts |
| Calcium Stearate | 0.10 part |

*®Profax 6501 from Himont U.S.A.

Stabilizers are solvent blended into polypropylene as solutions in methylene chloride and after removal of solvent by evaporation at reduced pressure, the resin is extruded using the following extruder conditions:

| | | Temperature (°C) |
|---|---|---|
| Cylinder #1 | | 232 |
| Cylinder #2 | | 246 |
| Cylinder #3 | | 260 |
| Gate #1 | | 260 |
| Gate #2 | | 260 |
| Gate #3 | | 260 |
| RPM | 100 | |

The melt flow rate (MFR) is determined by ASTM method 1238, condition L. The melt flow rate is a measure of the molecular weight for a specific type of polymer. Higher values mean lower molecular weight and indicate decomposition of the polymer. The results are shown in the following table.

| Additives | MFR After Extrusion (g/10 min) | |
| --- | --- | --- |
| | 1 | 5 |
| Base Resin | 5.7 | 11.4 |
| 0.1 % Antioxidant A | 4.5 | 6.2 |
| 0.1 % Antioxidant A + 0.05 % of the compound of Example 1 | 2.4 | 3.6 |
| 0.1 % Antioxidant A + 0.05 % of the compound of Example 2 | 2.4 | 3.0 |
| 0.1 % Antioxidant A + 0.05 % of the compound of Example 3 | 2.3 | 3.1 |

Antioxidant A: neopentyl tetrakis[3-(3',5'-di-tert-butyl-4'-hydroxyphenyl)propanoate]

The compounds are thus seen to be effective process stabilizers in polypropylene compositions containing a phenolic antioxidant.

## Claims

1. A compound of the formula (I)

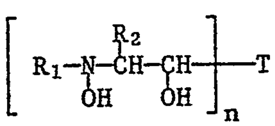

(I)

wherein $R_1$ is alkyl having 1 to 36 carbon atoms, cycloalkyl having 5 to 12 carbon atoms, phenyl which is unsubstituted or substituted by alkyl having 1 to 36 carbon atoms, naphthyl which unsubstituted or substituted by alkyl having 1 to 36 carbon atoms, or aralkyl having 7 to 9 carbon atoms which is unsubstituted or substituted by alkyl having 1 to 36 carbon atoms, $R_2$ is hydrogen or has one of the meanings given for $R_1$, n is 1 to 4, and
when n is 1, T has one of the meanings given for $R_1$ or is

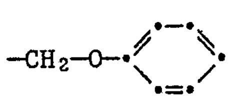

, or T and $R_2$ together with the carbon atoms to which they are attached form a ring containing 5 to 12 carbon atoms,
when n is 2, T is alkylene having 2 to 12 carbon atoms, or

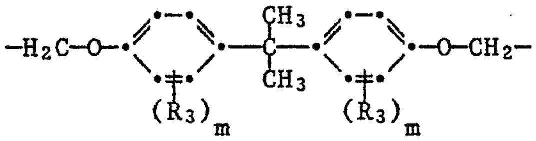

wherein m is 1 or 2 and $R_3$ is hydrogen, alkyl or alkoxy each having 1 to 4 carbon atoms, hydroxyl, halogen, cyano or nitro, or T is

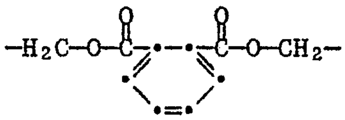 ,

or $R_2$ and T together with the carbon atoms to which they are attached form a 6-membered to 12-membered carbocyclic ring,
when n is 3, T is

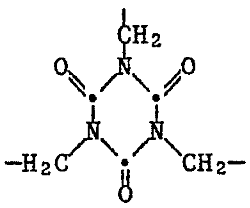

or

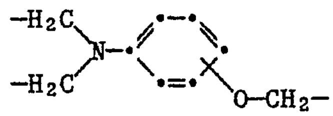

and
when n is 4, T is

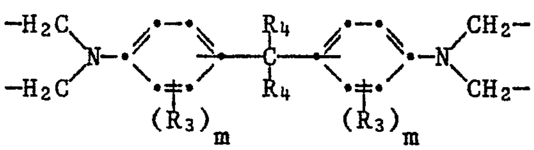

wherein $R_4$ is hydrogen or methyl and $R_3$ and m are as previously defined.

2. A compound according to claim 1, wherein $R_1$ is alkyl having 1 to 18 carbon atoms, cycloalkyl having 5 to 8 carbon atoms, phenyl, benzyl or phenylethyl, $R_2$ is hydrogen, n is 1 to 4, and,
when n is 1, T has one of the meanings given for $R_1$ in this claim or is

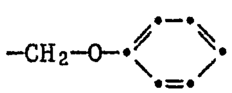 ,

,
when n is 2, T is alkylene having 2 to 5 carbon atoms or

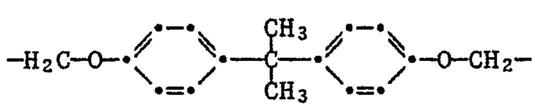 ,

when n is 3, T is

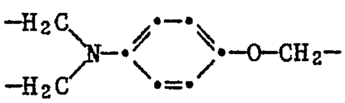

, and

when n is 4, T is

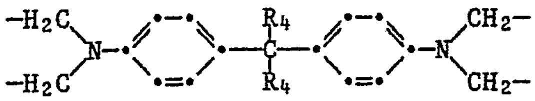

wherein $R_4$ is as defined in claim 1.

3. A compound according to claim 2, wherein $R_1$ is alkyl having 3 to 6 or 8 to 18 carbon atoms, cyclohexyl, cyclooctyl, phenyl or benzyl and n is 1 or 2, and,
when n is 1, T has one of the meanings given for $R_1$ in this claim or is

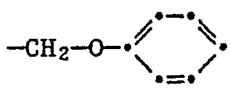

and
when n is 2, T is alkylene having 2 or 3 carbon atoms or

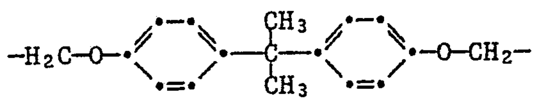 .

4. A compound according to claim 1, wherein $R_1$ is alkyl having 1 to 12 carbon atoms, cycloalkyl having 5 to 8 carbon atoms, phenyl, benzyl or phenylethyl, n is 2 and $R_2$ and T together with the carbon atoms to which they are attached form a 6-membered to 8-membered carbocyclic ring.

5. A compound according to claim 1, which is of the formula

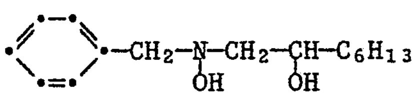 ,

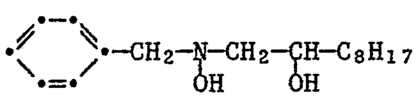 ,

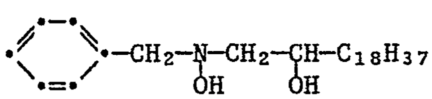 ,

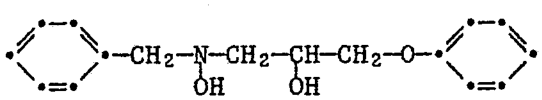 ,

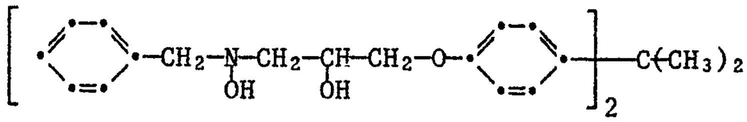,

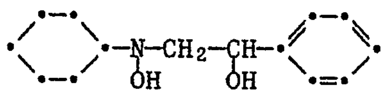

or

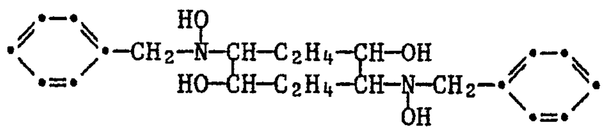.

6. A composition of matter comprising an organic material subject to oxidative, thermal and/or actinic degradation and at least one compound of the formula (IA)

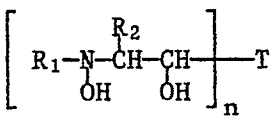

(IA)

wherein $R_1$ is alkyl having 1 to 36 carbon atoms, cycloalkyl having 5 to 12 carbon atoms, phenyl which is unsubstituted or substituted by alkyl having 1 to 36 carbon atoms, naphthyl which is unsubstituted or substituted by alkyl having 1 to 36 carbon atoms, or aralkyl having 7 to 9 carbon atoms which is unsubstituted or substituted by alkyl having 1 to 36 carbon atoms, $R_2$ is hydrogen or has one of the meanings given for $R_1$, n is 1 to 4, and
when n is 1, T has one of the meanings given for $R_1$ or is

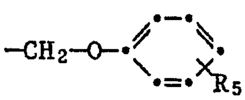

, wherein $R_5$ is hydrogen, alkyl or alkoxy each having 1 to 4 carbon atoms, hydroxyl, halogen, cyano or nitro, or T and $R_2$ together with the carbon atoms to which they are attached form a ring containing 5 to 12 carbon atoms,
when n is 2, T is alkylene having 2 to 12 carbon atoms, or

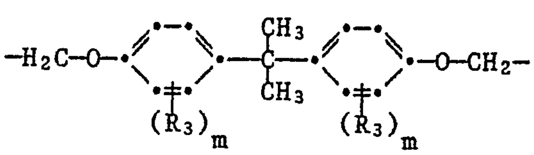

wherein m is 1 or 2 and $R_3$ is hydrogen, alkyl or alkoxy each having 1 to 4 carbon atoms, hydroxyl, halogen, cyano or nitro, or T is

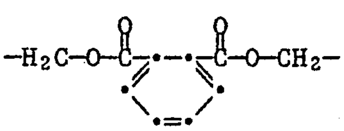,

or $R_2$ and T together with the carbon atoms to which they are attached form a 6-membered to 12-membered carbocyclic ring,
when n is 3, T is

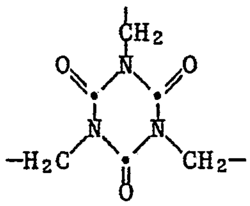

or

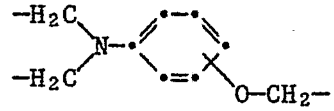

and
when n is 4, T is

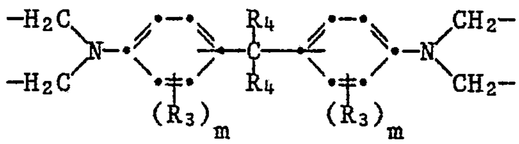

wherein $R_4$ is hydrogen or methyl and $R_3$ and m are as previously defined.

7. The composition of claim 6, wherein the organic material is a synthetic polymer.

8. The composition of claim 7, wherein the synthetic polymer is a polyolefin homopolymer or copolymer.

9. The composition of claim 6 which also contains a metal salt of a higher fatty acid and/or a phenolic antioxidant.

10. Use of a compound of formula (IA) according to claim 6 for stabilizing an organic material against oxidative, thermal and/or actinic degradation.

European Patent Office

# EUROPEAN SEARCH REPORT

Application number EP 87810720.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP - A1 - 0 209 025 (BAYER AG)<br>* Examples 1-3; claim 1 *<br>-- | 1-3 | C 07 C 83/04<br>C 08 K 5/32 |
| D,A | JOURNAL OF THE CHEMICAL SOCIETY, PERKIN TRANSACTIONS I, 1978<br>S.JORDAN et al. "The synthesis and oxidation of N-hydroxy-derivatives of the ß-adrenoceptor antagonists bufuralol and toliprolol"<br>pages 928-933<br>* Page 929, compound 7 *<br>-- | 1,6 | |
| A | EP - A1 - 0 138 767 (CIBA-GEIGY)<br>* Claims 1-5,17-20 * | 1,6-10 | |
| D,A | & US-A-4 590 231<br>-- | | TECHNICAL FIELDS SEARCHED (Int. Cl.4) |
| A | US - A - 3 821 304 (KLEMCHUK)<br>* Abstract; column 1, lines 21-35; column 2, lines 32-56 *<br>---- | 1,6-8,<br>10 | C 07 C 83/00<br>C 08 K<br>C 07 D 251/00 |

The present search report has been drawn up for all claims

| Place of search | Date of completion of the search | Examiner |
|---|---|---|
| VIENNA | 19-02-1988 | KÖRBER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82